# FASCICULE DE BREVET EUROPEEN

(11) **EP 1 808 930 B1**
(45) Date de publication et mention de la délivrance du brevet: **30.11.2011**
(21) Numéro de dépôt: 07000632.5
(22) Date de dépôt: 12.01.2007
(51) Int. Cl.: H01Q 1/24, H04M 1/02, H04B 1/38

(54) **Téléphone mobile avec antenne intégrée suffisamment distante de la tête de l'utilisateur**
Mobiltelefon beinhaltend eine integrierte Antenne mit ausreichender Entfernung zum Kopf des Anwenders
Mobile telephone comprising an antenna sufficiently away from the head of the user

(30) Priorité: 12.01.2006 FR 0600282
(43) Date de publication de la demande: 18.07.2007
(73) Titulaire: Apple Inc., Cupertino, CA 95014 (US)
(72) Inventeur: Romao, Fernando, 78360 Montesson (FR)
(74) Mandataire: Lang, Johannes

(56) Documents cités:
- EP-A1- 1 324 425
- WO-A2-02/35643
- US-A- 5 561 437
- US-A1- 2002 180 651
- US-A1- 2005 179 602

## Description

La présente invention concerne un terminal mobile du type à comporter au moins deux parties articulées entre elles et à communiquer en mode téléphonie avec un autre équipement par signaux radiofréquence.

De manière générale, un terminal mobile du type à communiquer en mode téléphonie avec un autre équipement par signaux radiofréquence est un dispositif qui comporte des éléments métalliques tels qu'un circuit imprimé, une batterie, etc., et au moins une antenne destinée à résonner à au moins une fréquence de résonance. De plus, comme on le verra par la suite, l'objet de l'invention se limite aux terminaux mobiles de communication radiofréquence qui comportent au moins deux parties distinctes et articulées entre elles. La première de ces parties, appelée par la suite partie recouverte B, comporte l'antenne ou au moins l'une des antennes équipant le terminal mobile. La deuxième de ces parties est appelée par la suite partie recouvrante A. Les parties A et B sont articulées de manière à ce qu'elles se recouvrent au moins partiellement lorsque le terminal mobile est en mode rangé, c'est-à-dire lorsque l'encombrement du terminal est minimal.

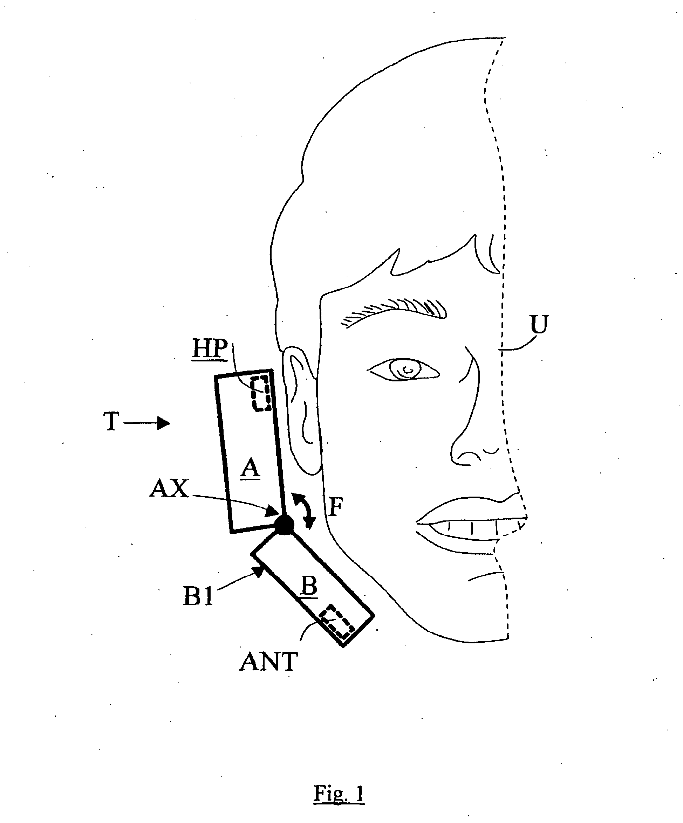

La Fig. 1 représente un schéma synoptique d'un exemple de terminal mobile de communication radiofréquence T vu de profil selon l'état de la technique. Le terminal T, qui peut-être de manière non limitative un téléphone mobile, comporte en outre une antenne ANT située à proximité du côté B1 de la partie recouverte B. La partie recouvrante A est représentée sur la Fig. 1 comme étant la partie du terminal mobile T qui comporte un haut-parleur HP. Cependant, la partie recouvrante A peut-être toute autre partie du terminal mobile T tel que par exemple, une partie qui comporterait un clavier, un écran, etc. du terminal mobile T ou qui ne comporterait aucun élément fonctionnel, et dont les dimensions ne sont pas forcément identiques à celles de la partie recouverte B.

L'articulation des parties A et B est ici une rotule d'axe AX qui permet à la partie recouvrante A de pivoter autour de l'axe AX selon la flèche F. D'autre type d'articulations peuvent être également envisagées tel que le glissement de la partie recouvrante A par rapport à la partie recouverte B.

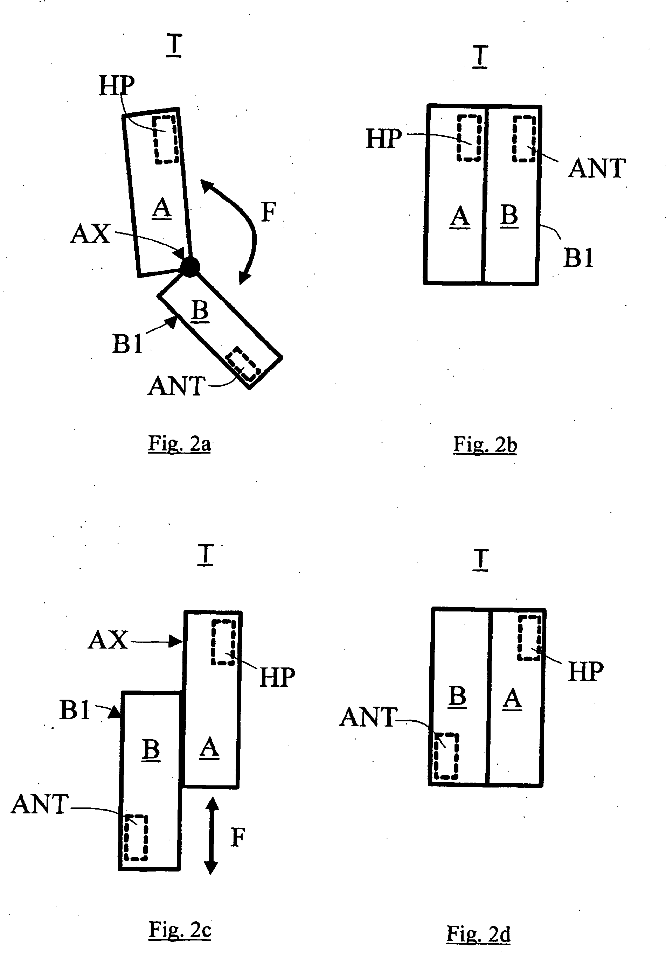

Les Figs. 2a, 2b et 2c, 2d montrent deux exemples d'articulation des parties A et B. Les Figs. 2a et 2c représentent ces deux parties lorsque le terminal T est en mode téléphonie et les Figs. 2b et 2d représentent le terminal T lorsqu'il est en mode rangé. Sur les Figs. 2a et 2b, les parties A et B sont articulées autour de l'axe AX de manière à ce qu'elles se recouvrent, ici complètement par pivotement de l'une des deux parties. Sur les Figs. 2c et 2d, les parties A et B sont articulées selon une glissière d'axe AX de manière à ce qu'elles se recouvrent, ici complètement par glissement de l'une par rapport à l'autre le long de l'axe AX.

Quel que soit le type utilisé, par exemple patch ou à fouet, une antenne lorsqu'elle résonne émet un rayonnement en champs lointain et un rayonnement en champs proche. On peut noter que les antennes patch sont le plus souvent utilisées car leur diagramme de rayonnement en champ lointain est comparable à celui d'antennes conventionnelles qui, on le rappelle, n'utilisent pas de plan de masse, et celui en champ proche est tel que peu de courant est généré dans des structures situées à proximité du terminal mobile T en comparaison avec les courants générés par d'autres antennes qui ne comportent pas de plan de masse.

Cependant et ce quel que soit le type d'antenne, un terminal mobile de communication radiofréquence T doit respecter une réglementation établie sur des observations effectuées en laboratoire. Cette réglementation, établie par des instances internationales, limite les rayonnements dans les structures situées à proximité du terminal mobile T telles que les tissus humains d'un utilisateur. Cette réglementation se traduit en termes de débit d'absorption spécifique D.A.S. également connu sous le terme S.A.R. (Specific Absorption Rate en anglais) dont l'unité s'exprime en W/kg et qui représente le taux de transfert de puissance à une masse unitaire de corps. Le débit d'absorption spécifique D.A.S. est fonction de la fréquence, de l'intensité, de la configuration source de rayonnement-organisme, de la présence ou de l'absence de facteurs absorbants ou réfléchissants, de la dimension, de la forme et des propriétés bio-électriques de l'organisme considéré. On peut noter qu'en pratique, une distance minimale DMTmin de l'ordre de 1 à 2 cm doit être respectée entre l'antenne ANT ou l'élément résonant d'une antenne ANT dans le cas où cette antenne est une antenne patch, d'une part, et l'utilisateur U, d'autre part, lorsque le terminal mobile T est en mode rangé. De même, une distance minimale DMRmin de l'ordre de 1 à 2 cm doit être également respectée entre l'antenne ANT ou l'élément résonant de l'antenne ANT et l'utilisateur U lorsque le terminal mobile T est en mode téléphonie.

De manière à respecter cette réglementation, l'antenne ANT est positionnée de telle sorte qu'elle soit éloignée le plus loin possible de la tête d'un utilisateur U lorsque le terminal T est en mode téléphonie, c'est-à-dire qu'elle est située à proximité du côté B1 de la partie recouverte B. Cependant, lorsque le terminal T est en mode rangé, ce côté peut être en contact avec l'utilisateur U et la distance minimale DMRmin requise par la réglementation risque de ne pas être respectée lorsque le terminal T est rangé, par exemple dans la poche d'un vêtement d'un utilisateur U et que le côté B1 est tourné vers cet utilisateur.

Une solution évidente à ce problème est de préserver la distance minimale DMRmin par des moyens mécaniques tels qu'une coque englobant de toutes parts l'antenne ANT ou l'élément résonant de l'antenne ANT. Cette solution implique cependant un accroissement non négligeable du volume du terminal T qui n'est pas souhaité par les utilisateurs.

La demande de brevet européenne EP 1324425 divulgue un terminal comportant deux parties distinctes et articulées entre elles. Deux antennes sont situées dans la partie recouvrante de ce terminal. Une première antenne (48) qui est située en vis-à-vis directe avec le plan de jonction des deux parties et l'autre (47) est située proche du côté opposé au plan de jonction de cette partie recouvrante. Lorsque le terminal est en mode ouvert, les deux antennes sont opérationnelles et lorsque les performances d'une antenne se dégradent (à cause d'un effet de doigt ou lorsque le terminal est posé sur une table), l'autre antenne reste opérationnelle. Lorsque le terminal est en mode rangé, la première antenne est perturbée et seule l'autre antenne est opérationnelle. La solution proposée par cette demande pour préserver une distance minimale consiste donc à commuter deux antennes selon le mode de fonctionnement du terminal. Cette solution ne peut s'appliquer que lorsque le terminal comporte deux antennes ce qui nécessite un encombrement important à l'intérieur du terminal.

La demande de brevet américain US2002180651A1 décrit un terminal de communication comportant également deux parties distinctes et articulées entre elles. Une seule antenne est située dans la partie recouverte du terminal c'est-à-dire celle qui ne comporte pas le haut-parleur. La distance minimale entre l'élément résonant et l'utilisateur lorsque le terminal est en mode rangé n'est pas assurée car elle dépend de la position du terminal dans la poche d'un utilisateur.

Le but de la présente invention est donc de résoudre le problème soulevé ci-dessus de manière à définir un terminal mobile équipé d'une seule antenne permettant d'obtenir des diagrammes de rayonnement convenables tout en assurant une distance minimale entre l'utilisateur et l'élément résonnant de l'antenne qui permette de répondre aux exigences de la réglementation en vigueur et ce, que le terminal soit en mode téléphonie ou en mode rangé. La présente invention est telle que définie dans la revendication 1.

Pour ce faire, la présente invention prévoit un terminal mobile de communication radiofréquence comportant au moins deux parties distinctes et articulées entre elles, dites partie recouvrante et partie recouverte, qui sont au moins partiellement superposées l'une sur l'autre lorsque ledit terminal est en mode rangé, ledit terminal étant équipé d'une antenne située à proximité de l'un des côtés de ladite partie recouverte, ledit terminal est caractérisé en ce que ledit côté est tel que la surface projetée de l'antenne sur lui est recouverte par ladite partie recouvrante lorsque le terminal est en mode rangé.

Ainsi, en mode rangé, la distance minimale DMRmin est assurée mécaniquement sans que l'encombrement du terminal mobile n'en soit pour autant augmenté.

Selon un mode de réalisation de la présente invention, ladite antenne comportant un élément destiné à résonner selon au moins une fréquence et situé en vis-à-vis et à distance d'un plan de masse, le terminal mobile est caractérisé en ce que ledit élément destiné à résonner est situé à proximité dudit côté et ledit plan de masse est situé à proximité du côté de ladite partie recouverte qui est en vis-à-vis du côté de ladite partie recouverte à proximité duquel ledit élément destiné à résonner est situé.

Ce mode de réalisation est avantageux car il permet que le fonctionnement d'une antenne patch ne soit que peu influencé par la main de l'utilisateur en cours de communication. Cet avantage est obtenu car la main de l'utilisateur est alors à proximité du plan de masse et non de l'élément résonant de l'antenne comme cela se produit dans les terminaux de l'état de la technique.

Selon un mode de réalisation de la présente invention, ladite antenne étant dite première antenne, ledit terminal mobile étant équipé d'une deuxième antenne et de moyens permettant de commuter les deux antennes selon que le terminal mobile est en mode rangé ou en mode téléphonie, ledit terminal mobile de communication est caractérisé en ce que lesdits moyens de commutation commutent ledit terminal sur ladite première antenne lorsque ledit terminal mobile est en mode rangé et sur ladite deuxième antenne lorsqu'il est en mode téléphonie.

Ce mode de réalisation de la présente invention permet d'assurer mécaniquement que la distance minimale DMTmin requise par la réglementation en vigueur soit respectée car ladite deuxième antenne, conformément à l'état de la technique, est alors située de sorte qu'elle soit la plus éloignée possible de la tête de l'utilisateur lorsque le terminal mobile est en mode téléphonie.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente un schéma synoptique d'un exemple de terminal mobile selon l'état de la technique,
les Figs. 2a à 2d représentent des schémas illustrant des exemples d'articulations de la partie recouvrante et de la partie recouverte,
les Figs. 3a et 3c représentent des schémas synoptiques d'un exemple de terminal mobile selon la présente invention,
les Figs. 4a à 4f représentent des schémas illustrant des exemples de configurations des parties articulées d'un terminal mobile selon la présente invention,
la Fig. 5 représente un schéma synoptique d'un exemple de terminal mobile selon un mode de réalisation de la présente invention, et
la Fig. 6 représente un schéma synoptique d'un exemple de terminal mobile selon un autre mode de réalisation de la présente invention.

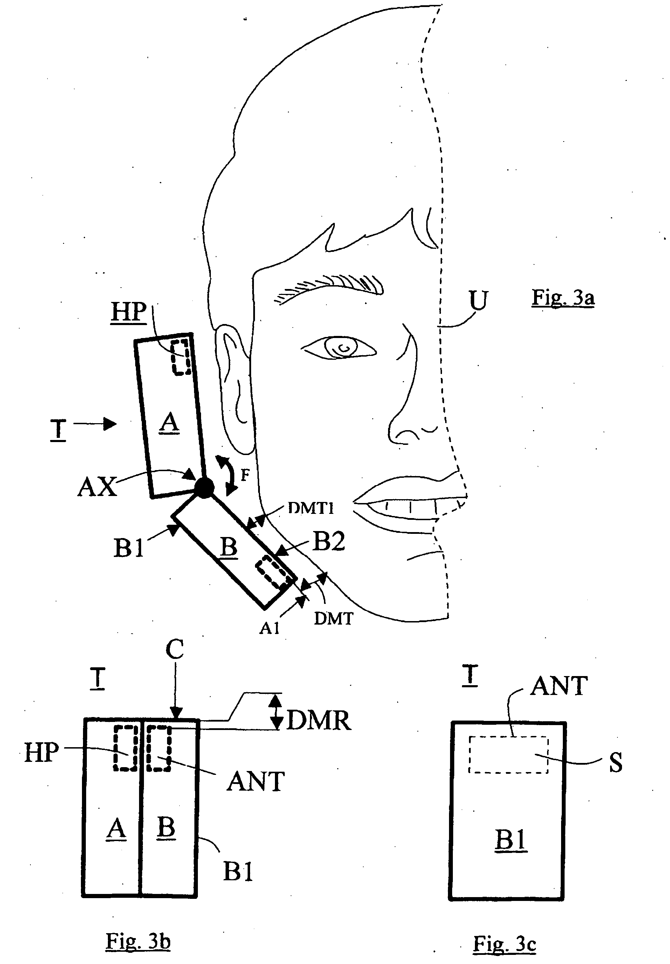

Selon la présente invention, illustrée par les Figs. 3a à 3c, un terminal mobile de communication radiofréquence T décrit dans la partie introductive est caractérisé en ce que la surface S projetée de l'antenne sur le côté B2 de la partie recouverte B est recouverte par la partie recouvrante A lorsque le terminal T est en mode rangé. Le côté B2 de la partie recouverte B est situé sur le plan de jonction entre la partie recouvrante A et la partie recouverte B, c'est-à-dire, selon cet exemple, le côté de la partie recouverte B le plus proche du visage de l'utilisateur U lorsque le terminal T est en mode téléphonie. La Fig. 3a représente le terminal mobile T vu de profil lorsqu'il est en mode téléphonie. La flèche F indique que les parties A et B sont articulées autour de l'axe AX. La Fig. 3b le représente vu de profil lorsqu'il est en mode rangé et la Fig. 3c le représente vu de face lorsque le terminal mobile T est en mode rangé.

En positionnant l'antenne ANT à proximité du côté B2, c'est-à-dire à proximité du plan de jonction, une distance DMT est définie entre le visage de l'utilisateur U et un côté A1 de l'antenne ANT. L'inventeur a observé que lorsque l'antenne ANT était située en partie basse du côté B2, le débit d'absorption spécifique D.A.S. maximum était respecté car la distance DMT est toujours supérieure à la distance minimale DMTmin requise par la réglementation. Ce n'est pas forcément le cas lorsque l'antenne ANT est située en partie haute car alors la distance DMT1, inférieure à la distance DMT peut ne pas être supérieure à la distance DMTmin.

Du fait qu'elle est positionnée à proximité du côté B2, lorsque le terminal mobile T est en mode rangé tel qu'illustré par les Figs. 3b et 3c, l'antenne ANT se retrouve entourée de matière. Une distance DMR est alors définie comme étant la distance minimale entre l'antenne ANT et le côté du terminal mobile le plus proche de l'antenne ANT, ici le côté C. Ainsi, la distance minimale DMRmin requise par la réglementation pour les terminaux mobiles en mode rangé est assurée mécaniquement lorsque la distance DMR est supérieure ou égale à la distance DMRmin et ce, quelle que soit la position de rangement du terminal mobile T dans une poche de l'utilisateur U et, qui plus est, sans que l'encombrement du terminal mobile T ne soit accru.

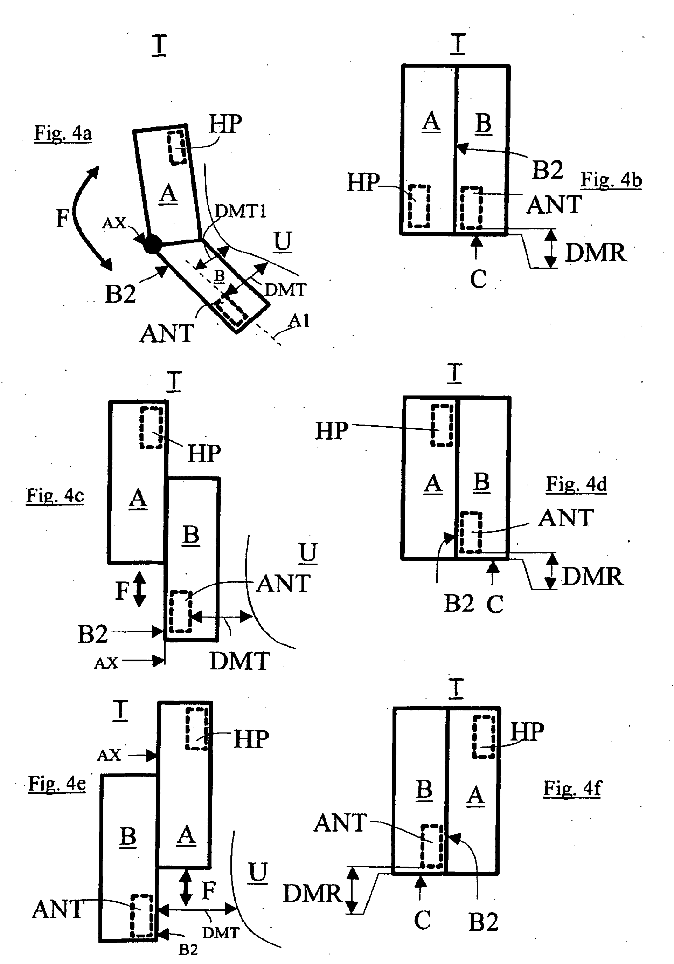

Les Figs. 4a et 4b représentent des schémas synoptiques d'un autre exemple de terminal mobile de communication T selon la présente invention. Selon cet exemple, l'antenne ANT est positionnée de manière classique c'est-à-dire le plus éloignée de l'utilisateur lorsque le terminal mobile de communication T est en mode téléphonie. Cependant, la partie A recouvre la partie B et plus particulièrement la surface projetée S de l'antenne sur le côté B2 de la partie recouverte B.

Les Figs. 4c et 4d représentent des schémas synoptiques d'un autre exemple de terminal mobile de communication T selon la présente invention. Selon cet exemple, l'antenne ANT est positionnée de manière classique c'est-à-dire le plus éloignée de l'utilisateur lorsque le terminal mobile de communication T est en mode téléphonie. Cependant, la partie A recouvre par glissement selon l'axe AX la partie B et plus particulièrement la surface projetée S de l'antenne sur le côté B2 de la partie recouverte B.

Les Figs. 4e et 4f représentent des schémas synoptiques d'un autre exemple de terminal mobile de communication T selon la présente invention. Selon cet exemple, la partie A recouvre la surface projetée de l'antenne sur le côté B2 de la partie B par glissement selon l'axe AX. L'antenne ANT est positionnée sur le plan de jonction et est entourée de matière lorsque le terminal mobile de communication est en mode rangé.

Les Figs. 3a à 4f représentent des exemples de terminaux mobiles T incluant une antenne positionnée selon la présente invention. Il faut noter que la présente invention ne se limite pas uniquement à ce type de configurations des parties articulées du terminal mobile T.

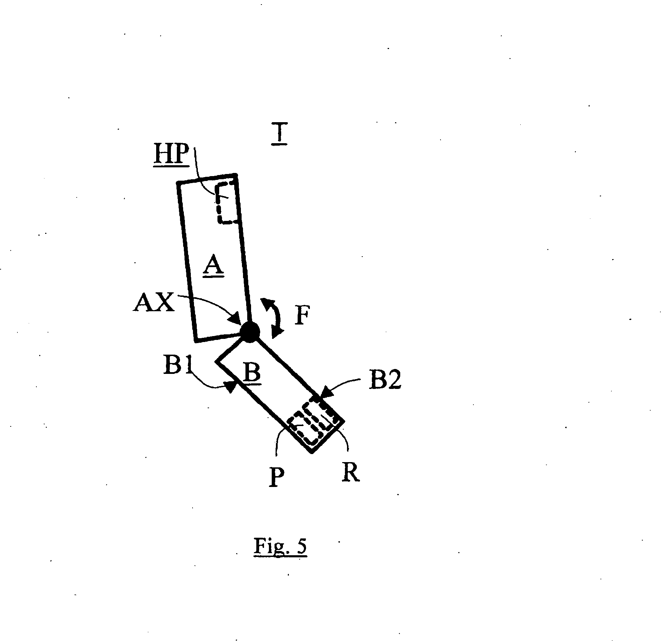

Selon un mode de réalisation de la présente invention illustré par la Fig. 5, l'antenne ANT est une antenne patch, c'est-à-dire qu'elle comporte un élément R destiné à résonner selon au moins une fréquence et situé en vis-à-vis et à distance d'un plan de masse P. Dans ce cas, l'élément R est situé à proximité du côté B2, c'est-à-dire du plan de jonction des parties A et B, et le plan de masse P est situé à proximité du côté B de ladite partie recouverte qui est en vis-à-vis du côté B2.

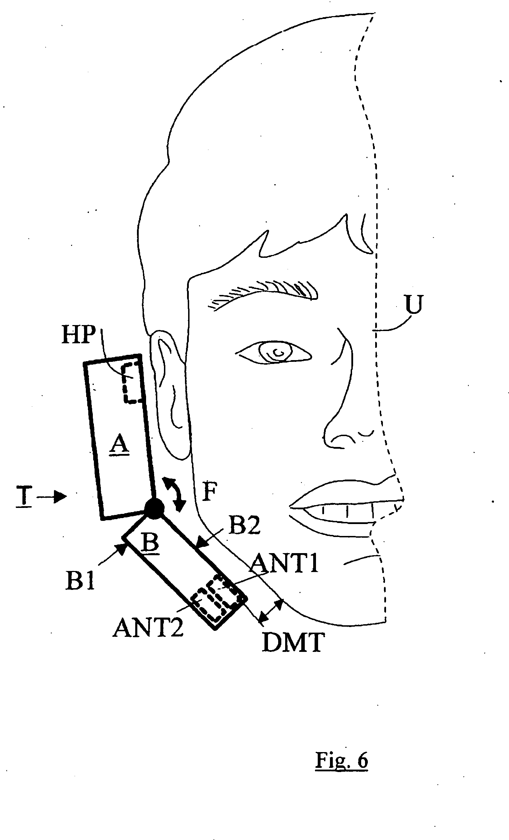

La Fig. 6 représente un schéma synoptique d'un terminal mobile selon un autre mode de réalisation de la présente invention.

Selon ce mode de réalisation, le terminal mobile est équipé d'une antenne ANT1, qui peut-être une antenne patch ou tout autre antenne, destiné à être utilisée uniquement en mode rangé par le terminal mobile T. L'antenne ANT1 est positionnée selon la présente invention à proximité du côté B2 de la partie recouverte B. Le terminal mobile est également équipé d'une autre antenne ANT2 destinée à être uniquement utilisée en mode téléphonie. L'antenne ANT2 est quant à elle située selon cet exemple également sur la partie recouverte B mais à proximité du côté B1. Elle pourrait être située sur une autre partie du terminal mobile T. Le terminal mobile T est également équipé de moyens permettant la commutation de ces deux antennes selon que le terminal mobile T est en mode rangé ou en mode téléphonie.

## Revendications

1. Terminal mobile de communication radiofréquence comportant au moins deux parties distinctes et articulées entre elles, l'une des parties, dite partie recouvrante (A), comprend un haut-parleur (HP), et l'autre partie est dite partie recouverte (B), lesdites parties étant au moins partiellement superposées l'une sur l'autre lorsque ledit terminal est en mode rangé, ledit terminal étant équipé d'une antenne (ANT), ladite antenne (ANT) comportant un élément (R) destiné à résonner selon au moins une fréquence et situé en vis-à-vis et à distance d'un plan de masse (P),
**caractérisé en ce que**
le terminal comprend un seul élément (R) qui est destiné à résonner selon au moins une fréquence, ledit seul élément (R) qui est destiné à résonner selon au moins une fréquence étant situé à proximité de l'un (B₂) des côtés de ladite partie recouverte (B), ledit côté (B₂) étant tel qu'une surface projetée (S) de l'antenne (ANT) sur lui est recouverte par ladite partie recouvrante (A) lorsque le terminal est en mode rangé, et
ledit plan de masse (P) est situé à proximité du côté (B₁) de ladite partie recouverte (B) qui est en vis-à-vis du côté (B₂) de ladite partie recouverte (B) à proximité duquel ledit élément destiné à résonner (R) est situé.

## Claims

1. Radiofrequency communication mobile terminal comprising at least two distinct parts articulated between each other, one of the parts, called covering part (A), comprising a loudspeaker (HP), and the other part being called covered part (B), said parts at least partially overlapping each other when said terminal is in a folded mode, said terminal being equipped with an antenna (ANT), said antenna (ANT) comprising an element (R) for resonating according to at least one frequency and located in front of and at a distance of a ground plane (P),
**characterized in that**
the terminal comprises a single element (R) for resonating according to at least one frequency, said single element (R) for resonating according to at least one frequency being located in the neighbourhood of one (B₂) of the sides of said covered part (B), said side (B₂) being such that a projected surface (S) of the antenna (ANT) on it is covered by said covering part (A) when the terminal is in a folded mode, and
said ground plane (P) is located in the neighbourhood of the side (B₁) of said covered part (B), which is in front of the side (B₂) of said covered part (B), in the neighbourhood of which said element (R) for resonating is located.

## Patentansprüche

1. Mobiles Endgerät für Hochfrequenzkommunikation, umfassend mindestens zwei unterschiedliche, zwischen einander bewegliche Teile, wobei einer der Teile, der sogenannte abdeckende Teil (A), einen Lautsprecher (HP) umfasst, und der andere Teil der sogenannte abgedeckte Teil (B) ist, wobei die Teile sich zumindest teilweise einander überlagern, wenn das Endgerät in einem eingefahrenen Modus ist, wobei das Endgerät mit einer Antenne (ANT) ausgerüstet ist, wobei die Antenne (ANT) ein Bauteil (R) umfasst, das angepasst ist, gemäß mindestens einer Frequenz zu schwingen, und gegenüber und beabstandet zu einer Grundplatte (P) angeordnet ist,
**dadurch gekennzeichnet, dass**
das Endgerät ein einziges Bauteil (R) umfasst, das angepasst ist, gemäß mindestens einer Frequenz zu schwingen, wobei das einzige Bauteil (R), das angepasst ist, mindestens gemäß einer Frequenz zu schwingen, in der Nachbarschaft einer (B₂) der Seiten des abgedeckten Teils (B) angeordnet ist, wobei die Seite (B₂) derartig ist, dass eine auf sie projizierte Oberfläche (S) der Antenne (ANT) durch den abdeckenden Teil (A) abgedeckt ist, wenn das Endgerät in einem eingefahrenen Modus ist, und
die Grundplatte (P) in der Nachbarschaft der Seite (B₁) des abgedeckten Teils (B) angeordnet ist, die gegenüber der Seite (B₂) des abgedeckten Teils (B) ist, in der Nachbarschaft deren das Bauteil (R), das zum Schwingen angepasst ist, angeordnet ist.
